# EUROPÄISCHE PATENTANMELDUNG

(11) **EP 0 881 861 A1**
(43) Veröffentlichungstag der Anmeldung: **02.12.1998**
(21) Anmeldenummer: 98102782.4
(22) Anmeldetag: 18.02.1998
(51) Int. Cl.: H05B 3/84, B60S 1/04, B60S 1/02

(54) **Verfahren und Vorrichtung zur Steuerung eines Heizelementes in einer Kraftfahrzeugscheibe**

(30) Priorität: 06.03.1997 DE 19709166
(71) Anmelder: Daimler-Benz Aktiengesellschaft, 70567 Stuttgart (DE)
(72) Erfinder: Faix, Heinz, 75391 Gechingen (DE)

(57) **Zusammenfassung**

Die vorliegende Erfindung betrifft ein Verfahren zur Steuerung eines Heizelementes, mittels dem die Windschutzscheibe eines Kraftfahrzeuges im Bereich der Ruheposition des/der Wischerblätter eines bzw. mehrerer Scheibenwischer erwärmbar ist, wobei das Heizelement mit Energie versorgt wird, wenn die Außentemperatur geringer ist als ein Wert T_s und wenn der Motor des Kraftfahrzeuges in Betrieb ist.

Ebenso betrifft die Erfindung eine Vorrichtung zur Durchführung des Verfahrens.

## Beschreibung

Die vorliegende Erfindung betrifft ein Verfahren zur Steuerung eines Heizelementes gemäß dem Oberbegriff des Patentanspruches 1.

Ebenso betrifft die Erfindung eine Vorrichtung zur Durchführung des Verfahrens.

Aus der US-PS 5,386,098 ist bereits ein Verfahren bekannt, bei dem ein Heizelement für den Bereich der Scheibe, in dem die Scheibenwischer in ihrer Ruheposition aufliegen, aktiviert wird, wenn die Klimaanlage des Fahrzeuges in der "Defrost-Betriebsweise" betrieben wird. Nachdem diese "Defrost-Betriebsweise" beendet ist, läuft das Heizelement noch eine bestimmte Zeit weiter. Diese bestimmte Zeit liegt dabei in der Größenordnung von einigen Minuten.

Weiterhin ist es aus der deutschen Auslegeschrift DT 25 07 037 B1 bekannt, eine Heckscheibenheizung so auszubilden, daß Widerstandsdrähte auch in dem Bereich verlaufen, in dem der Heckscheibenwischer in Ruheposition aufliegt. Dadurch soll bei eingeschalteter Heckscheibenheizung ein eventuell festgefrorener Heckscheibenwischer gelöst werden.

Aufgabe der vorliegenden Erfindung ist es, eine bedarfsgerechte Einschaltung einer Heizung der Scheibe im Bereich der Ruheposition der Scheibenwischer vorzuschlagen.

Es kann sich dabei um die Windschutzscheibe des Kraftfahrzeuges handeln oder beispielsweise auch um eine Heckscheibe eines Kraftfahrzeuges, soweit dieses Kraftfahrzeug mit einem Heckscheibenwischer ausgestattet ist.

Erfindungsgemäß wird dazu nach Anspruch 1 ein Verfahren dargestellt, bei dem das Heizelement mit Energie versorgt wird, wenn die Außentemperatur geringer ist als ein Wert T_s und wenn der Motor des Kraftfahrzeuges in Betrieb ist.

Dadurch wird vorteilhaft erreicht, daß ein Festfrieren des Scheibenwischers vermieden werden kann. Durch ein Festfrieren kann es zu Beschädigungen des Gummis des Scheibenwischers kommen, wenn dieser gewaltsam in Bewegung gesetzt wird. Der Wert T_s der Außentemperatur kann beispielsweise +5 Grad Celsius betragen.

Gegenüber dem aus der DT 25 07 037 B1 bekannten Verfahren kann dabei eine Einschaltung des Heizelementes erfolgen, auch wenn die Heckscheibenheizung nicht eingeschaltet ist, ein Lösen eines eventuell festgefrorenen Scheibenwischers aber wegen der Wetterverhältnisse gleichwohl sinnvoll ist. Ebenso kann eine Einschaltung eines Heizelementes in der Windschutzscheibe des Fahrzeuges erfolgen, wozu dieser Entgegenhaltung kein Hinweis zu entnehmen ist. Gegenüber dem aus der US-PS 5,386,098 bekannten Stand der Technik kann eine Einschaltung des Heizelementes unterbleiben, wenn die Klimaanlage wegen einer hohen Luftfeuchte in der Defrost-Betriebsweise betrieben wird, obwohl die Außentemperatur größer ist als T_s. Es kann dann davon ausgegangen werden, daß die Scheibenwischer nicht angefroren sind, auch wenn die Klimaanlage in der Defrost-Betriebsweise betrieben wird.

Andererseits ist es denkbar, daß vor dem Beginn einer Fahrt die Scheiben vom Eis freigekratzt werden. Wenn die Scheibenwischer auf der Scheibe aufliegen und nicht weggeklappt waren, wird der Fahrzeugführer die Wischer nicht "mit Gewalt" losreißen sondern in diesem Bereich die Scheibe nicht freikratzen. Da dann das Sichtfeld aber frei ist, hat der Fahrzeugführer keine Veranlassung, die Klimaanlage in der Defrost-Betriebsweise zu betreiben. Beim Stand der Technik wird dann also das Heizelemente nicht eingeschaltet, obwohl dies eigentlich notwendig wäre.

Vorteilhaft wird demgegenüber bei dem erfindungsgemäßen Verfahren das Heizelement am Beginn einer Fahrt gestartet, was aus dem Starten des Motors abgeleitet wird, und zwar dann, wenn die Temperatur entsprechend gering ist und deswegen vermutet werden kann, daß die Scheibenwischer möglicherweise vereist sind.

Bei dem Verfahren nach Anspruch 2 wird nach Ablauf einer Zeitspanne T_zs1 die Energiezufuhr zum Heizelement unterbrochen, wenn aufgrund von Sensoren erkannt wird, daß die Sonne scheint und also kein Niederschlag vorhanden ist.

Dadurch kann vorteilhaft vermieden werden, daß unnötig Energie verbraucht wird. Hinsichtlich des Sensoraufwandes ergibt sich eine kostengünstige Lösung, wenn eine Klimaanlage vorhanden ist. Eine Klimaanlage weist üblicherweise einen Sonnensensor auf, um zum einen die Regelgüte zu verbessern als und zum anderen um den vorgegebenen Temperatursollwert an das Temperaturempfinden des Benutzers anpassen zu können. Bei einer Sonneneinstrahlung empfindet der Benutzer bereits eine niedrigere Temperatur als angenehm als bei einem eher trüben Wetter. Der Temperatursollwert kann also bei Sonneneinstrahlung abgesenkt werden gegenüber dem Temperatursollwert bei trübem Wetter.

Wenn also ein solcher Sonnensensor vorhanden ist, kann das Heizelement abgeschaltet werden, wenn der Sonnensensor erkennt, daß die Sonne scheint. In diesem Fall kann - zumindest bedingt - für die nächste Zeit davon ausgegangen werden, daß keine Niederschläge vorliegen und der/die Scheibenwischer nicht betätigt werden. Ebenso können auch Niederschlagssensoren Verwendung finden, die beispielsweise bekannt sind, um die Notwendigkeit einer Einschaltung der Scheibenwischer zu erkennen und/oder anhand der gemessenen Niederschlagsintensität die Geschwindigkeit bzw. Länge der Intervallpausen bei der Scheibenwischerbetätigung anpassen zu können. Die Zeitspanne T_zs1 kann beispielsweise 15 Minuten betragen.

Bei dem Verfahren nach Anspruch 3 wird nach Ablauf einer Zeitspanne T_zs2 nach dem Starten des Motors die Energiezufuhr zum Heizelement unterbrochen, wenn zwischenzeitlich keine Betätigung der Scheibenwischer erfolgte.

Dadurch kann ebenfalls erkannt werden, daß kein Niederschlag vorhanden ist, auch wenn die Sonne nicht scheint. Die Dauer der Zeitspanne T_zs2 kann vorteilhaft 25 Minuten betragen.

Bei dem Verfahren nach Anspruch 4 bleibt das Heizelement während einer Nachlaufzeitspanne T_nz eingeschaltet, die dann beginnt, wenn der/die Scheibenwischer in Ruhestellung sind, nachdem sie zuvor bewegt wurden.

Dadurch kann vorteilhaft vermieden werden, daß der bzw. die Scheibenwischer beispielsweise infolge einer Betätigung der Scheibenwaschanlage anfrieren können, obwohl die Wetterbedingungen im übrigen dies nicht erwarten lassen. Die Nachlaufzeitspanne T_nz kann dabei etwa 15 Minuten betragen.

Bei dem Verfahren nach Anspruch 5 erfolgt eine Abschaltung des Heizelementes, wenn das Fahrzeug länger als eine Zeitdauer T_st steht.

Dadurch kann vorteilhaft vermieden werden, daß sich die Scheibe lokal überhitzt, weil die Wärme nicht durch eine entsprechende Luftbewegung durch den Fahrtwind abgeführt wird. Die Zeitdauer T_st kann beispielsweise in der Größenordnung von 10 Minuten liegen.

Bei dem Verfahren nach Anspruch 6 wird das Heizelement witterungsunabhängig nach Ablauf einer Zeitspanne T_zs3 abgeschaltet, wenn ein Motorstart mit einer Motortemperatur oberhalb eines bestimmten Schwellwertes erfolgt.

Dadurch kann vorteilhaft ein unnötiger Betrieb des Heizelementens unterbunden werden, wenn dies nicht notwendig ist, weil der Motor beim Start bereits im warmen Zustand war. Der Schwellwert der Motortemperatur kann dabei etwa 70 ^{o}C betragen.

Bei einer Vorrichtung nach Anspruch 7 zur Durchführung eines der vorhergehenden Verfahren sind Steuermittel vorhanden zur Energieversorgung des Heizelementes einer Scheibe, wobei diesen Steuermitteln ein Signal hinsichtlich des Betriebszustandes des Motors, eines Außentemperatursensors und/oder eines Sonnensensors bzw. Niederschlagssensors zugeführt werden.

Ein Ausführungsbeispiel der Erfindung ist in der Zeichnung näher dargestellt. Es zeigt dabei im einzelnen:
- Fig. 1:: eine Darstellung eines Verfahrens zur Steuerung der Energieversorgung eines Heizelementes in einer Windschutzscheibe und
- Fig. 2:: eine Vorrichtung zur Durchführung des Verfahrens.

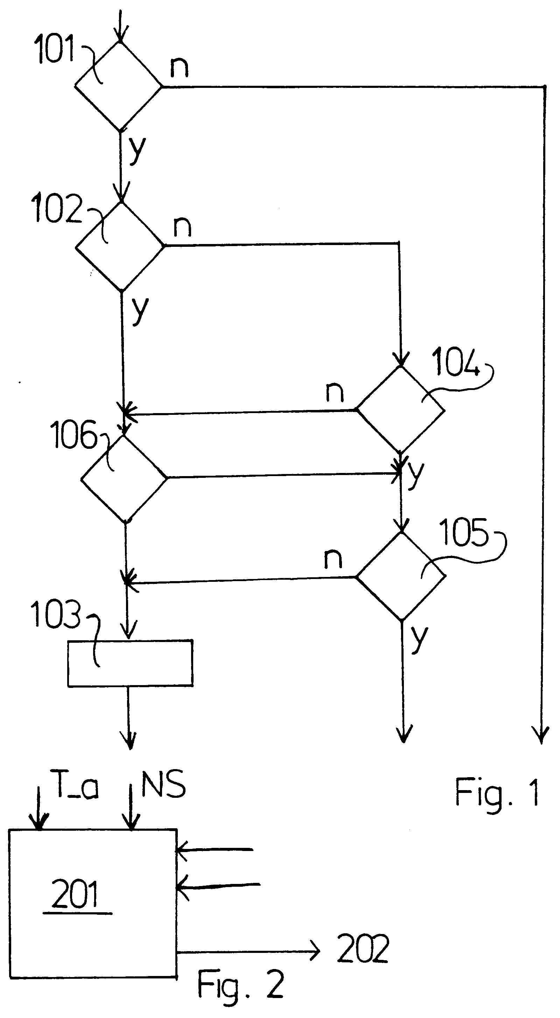

Figur 1 zeigt eine Darstellung der Steuerung der Energieversorgung eines Heizelementes in einer Windschutzscheibe. Dieser Verfahrensablauf stellt eine softwarebasierte Lösung einer Regelung dar. Dabei wird dieser Verfahrensablauf von einem zentralen Steuerprogramm vorwiegend zyklisch angestoßen. Nach dem Durchlauf erfolgt eine Rückkehr zu dem zentralen Steuerprogramm.

Um ein Festfrieren der Wischblätter eines oder mehrerer Scheibenwischer an der Windschutzscheibe oder der Heckscheibe eines Fahrzeuges zu vermeiden, ist vorteilhaft ein Heizelement in dem Bereich der Windschutzscheibe angeordnet, in dem die Wischblätter des bzw. der Scheibenwischer in deren Ruhestellung aufliegen. Es kann sich dabei um die Windschutzscheibe oder auch um die Heckscheibe handeln, sofern das Kraftfahrzeug mit einem Heckscheibenwischer ausgestattet ist.

Bei dem in Figur 1 dargestellten Verfahren wird zunächst in dem Schritt 101 geprüft, ob die Außentemperatur geringer ist als ein Wert T_s, der beispielsweise +5 Grad Celsius betragen kann, und ob zum anderen der Motor des Kraftfahrzeuges in Betrieb ist.

Wenn wenigstens eine der beiden Bedingungen nicht erfüllt ist, erfolgt keine Einschaltung des Heizelementes.

Wenn beide Bedingungen erfüllt sind, wird das Verfahren mit dem Schritt 102 fortgesetzt, in dem geprüft wird, ob Niederschläge festgestellt werden können. Dies kann beispielsweise anhand eines Sonnensensors festgestellt werden, dessen Signal vorteilhaft dann herangezogen werden kann, wenn das Fahrzeug eine Klimaanlage aufweist und deswegen ohnehin mit einem Sonnensensor ausgestattet ist. Erkennt der Sonnensensor, daß die Sonne scheint, kann darauf geschlossen werden, daß in der nächsten Zeit nicht mit Niederschlägen zu rechnen ist. Darüberhinaus unterstützt eine Sonneneinstrahlung auch ein Auftauen eventuell festgefrorener Scheibenwischer. Es ist ebenso denkbar, einen Niederschlagssensor zu verwenden, mittels dem beispielsweise erkannt wird, ob infolge von Niederschlägen die Scheibenwischer in Betrieb genommen werden müssen bzw. anhand dessen die Niederschlagsintensität festgestellt und darauf hin die Geschwindigkeit der Scheibenwischer bzw. die Dauer der Intervallpausen festgelegt wird.

Wenn kein Sonnenschein festgestellt werden konnte, erfolgt ein Übergang zu dem Schritt 106.

Wenn in dem Schritt 102 festgestellt wurde, daß die Sonne scheint, erfolgt ein Übergang zu dem Schritt 104, in dem geprüft wird, ob nach dem Starten des Motors des Kraftfahrzeuges eine Zeitspanne T_zs1 vergangen ist. Diese Zeitspanne T_zs1 kann beispielsweise 15 Minuten betragen.

Ist dies nicht der Fall, erfolgt ein Übergang zu dem Schritt 106, in dem das Heizelement mit Energie beaufschlagt wird.

Wenn diese Zeitspanne T_zs1 abgelaufen ist, erfolgt ein Übergang zu dem Schritt 105.

In dem Schritt 105 wird geprüft, ob eine Nachlaufzeitspanne T_nz vergangen ist, die dann beginnt, wenn der/die Scheibenwischer in Ruhestellung sind, nachdem sie zuvor bewegt wurden. Diese Nachlaufzeitspanne kann beispielsweise 15 Minuten betragen.

Ist dies nicht der Fall, erfolgt ein Übergang zu dem Schritt 103, in dem das Heizelement mit Energie beaufschlagt wird.

Wenn auch diese Nachlaufzeitspanne T_nz vergangen ist, wird das Heizelement nicht mit Energie beaufschlagt.

In dem Schritt 106 erfolgt eine Überprüfung, ob während eines Zeitspanne T_zs2 seit dem letzten Start des Motors die Scheibenwischer betätigt wurden. Diese Zeitspanne T_zs2 kann dabei in einer Größenordnung von etwa 25 Minuten liegen.

Ist dies der Fall, erfolgt ein Übergang zu dem Schritt 103, in dem das Heizelement mit Energie beaufschlagt wird.

Ist dies nicht der Fall, erfolgt ein Übergang zu dem Schritt 105.

Ohne daß dies in dem gezeigten Ausführungsbeispiel dargestellt wäre, kann weiterhin vorgesehen sein, daß das Heizelement ausgeschaltet wird, wenn das Kraftfahrzeug länger als eine Zeitspanne T_st von beispielsweise 10 Minuten still steht. Dadurch kann eine lokale Überhitzung der Scheibe vermieden werden, die dadurch entstehen kann, daß keine Wärmeabfuhr durch Fahrtwind erfolgt.

Ebenso kann vorgesehen sein, daß eine Abschaltung des Heizelementes bereits nach einer Zeitspanne T_zs3 von beispielsweise 15 Minuten erfolgt, wenn die Betriebstemperatur des Motors beim Start des Motors größer war als ein bestimmter Schwellwert der Motortemperatur, der beispielsweise 70 ^{o}C betragen kann. In diesem Fall steht bereits eine hinreichende Wärme zur Verfügung, um den Fahrzeuginnenraum aufzuheizen und dadurch ein Anfrieren der Scheibenwischer zu vermeiden.

Figur 2 zeigt ein Steuergerät 201, dem als Steuermittel Signale von Sensoren zugeführt werden. Diese Sensoren erfassen dabei die Außentemperatur T_a, den Niederschlag NS, die Sonneneinstrahlung und/oder ob der Motor in Betrieb ist. Ebenso kann ein Signal zugeführt werden, das die Fahrzeuggeschwindigkeit repräsentiert und/oder ein Signal, das die Motortemperatur repräsentiert. Diese Motortemperatur kann beispielsweise aus der Kühlwassertemperatur abgeleitet werden. In dem Steuergerät werden die gemessenen Werte der Sensoren entsprechend dem beschriebenen Verfahren verarbeitet.

Es kann ein Steuersignal 202 generiert werden, mit dem das Heizelement in der Windschutzscheibe bzw. Heckscheibe des Kraftfahrzeuges mit Energie versorgt wird.

## Patentansprüche

1. Verfahren zur Steuerung eines Heizelementes, mittels dem die Scheibe eines Kraftfahrzeuges im Bereich der Ruheposition des/der Wischerblätter eines bzw. mehrerer Scheibenwischer erwärmbar ist,
dadurch gekennzeichnet, daß das Heizelement mit Energie versorgt wird, wenn die Außentemperatur geringer ist als ein Wert T_s und wenn der Motor des Kraftfahrzeuges in Betrieb ist (101).

2. Verfahren nach Anspruch 1,
dadurch gekennzeichnet, daß nach Ablauf einer Zeitspanne T_zs1 nach dem Starten des Motors die Energiezufuhr zum Heizelement unterbrochen wird, wenn aufgrund von Sensoren erkannt wird, daß die Sonne scheint (102, 104).

3. Verfahren nach einem der Ansprüche 1 oder 2,
dadurch gekennzeichnet, daß nach Ablauf einer Zeitspanne T_zs2 nach dem Starten des Motors die Energiezufuhr zum Heizelement unterbrochen wird, wenn zwischenzeitlich keine Betätigung der Scheibenwischer erfolgte.

4. Verfahren nach einem der Ansprüche 1 bis 3,
dadurch gekennzeichnet, daß das Heizelement während einer Nachlaufzeitspanne T_nz eingeschaltet wird bzw. bleibt, die dann beginnt, wenn der/die Scheibenwischer in Ruhestellung sind, nachdem sie zuvor bewegt wurden (105).

5. Verfahren nach einem der Ansprüche 1 bis 4,
dadurch gekennzeichnet, daß eine Abschaltung des Heizelementes erfolgt, wenn das Fahrzeug länger als eine Zeitdauer T_st steht.

6. Verfahren nach einem der Ansprüche 1 bis 5,
dadurch gekennzeichnet, daß das Heizelement witterungsunabhängig nach Ablauf einer Zeitspanne T_zs3 abgeschaltet wird, wenn ein Motorstart mit einer Motortemperatur oberhalb eines bestimmten Schwellwertes erfolgt.

7. Vorrichtung zur Durchführung eines der vorhergehenden Verfahren,
dadurch gekennzeichnet, daß Steuermittel (201) vorhanden sind zur Energieversorgung des Heizelementes einer Scheibe, wobei diesen Steuermitteln ein Signal (203) hinsichtlich des Betriebszustandes des Motors, ein Signal (204) eines Außentemperatursensors und/oder eines Sonnensensors bzw. Niederschlagssensors und/oder ein Signal (205) betreffend die Fahrzeuggeschwindigkeit zugeführt werden.
